(19) Europäisches Patentamt
European Patent Office
Office européen des brevets

(11) **EP 4 734 539 A1**

(12) **EUROPEAN PATENT APPLICATION**

(43) Date of publication:
**29.04.2026   Bulletin 2026/18**

(21) Application number: **24209107.2**

(22) Date of filing: **28.10.2024**

(51) International Patent Classification (IPC):
**H04N 23/51** *(2023.01)*       **H04N 23/52** *(2023.01)*
**H04N 23/54** *(2023.01)*       **H04N 23/55** *(2023.01)*

(52) Cooperative Patent Classification (CPC):
**H04N 23/52; H04N 23/51; H04N 23/54; H04N 23/55**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Connaught Electronics Ltd.
County Galway H54 Y276 (IE)**

(72) Inventor: **Sultan-Tarakli, Almila
Tuam, H54 Y276 (IE)**

(74) Representative: **Jauregui Urbahn, Kristian
Valeo Schalter und Sensoren GmbH
CDA-IP
Laiernstraße 12
74321 Bietigheim-Bissingen (DE)**

(54) **CIRCUIT CARRIER ARRANGEMENT FOR A CAMERA AND CAMERA**

(57)    A circuit carrier arrangement (3) for a camera (1) comprises a circuit carrier (4) for mounting an imager chip (5) on a surface (7), a housing component (12), a first mounting element (10a) connecting a first carrier position (8a) of the circuit carrier (4) and a first housing position of the housing component (12) to each other, and a second mounting element (10b) connecting a second carrier position (8b) of the circuit carrier (4) and a second housing position of the housing component (12) to each other. Therein, a joint linear thermal expansion of the housing component (12), the first mounting element (10a) and the second mounting element (10b) along a straight first connection line (18a) between the first carrier position (8a) and the second carrier position (8b) is equal to a linear thermal expansion of the circuit carrier (4) along the first connection line (18a).

Fig.2

EP 4 734 539 A1

**Description**

The present invention is directed to a circuit carrier arrangement for a camera, in particular an automotive camera, wherein the circuit carrier arrangement comprises a circuit carrier for mounting an imager chip on a surface of the circuit carrier, a housing component, a first mounting element connecting the circuit carrier at a first carrier position and the housing component at a first housing position to each other, and a second mounting element connecting the circuit carrier at a second carrier position and the housing component at a second housing position to each other. The invention is further directed to a camera, in particular an automotive camera, comprising such circuit carrier arrangement.

Cameras, in particular automotive cameras, may be subject to varying temperatures as well during testing and qualification as during their regular lifetime. Cameras using a circuit carrier arrangement as specified above are known in automotive cameras. In such a design, it has been found that thermal variations may cause a deformation of the circuit carrier, which may result in a bending of the imager chip and/or a displacement of the imager chip in a direction perpendicular to the circuit carrier. Furthermore, the thermal variations may cause mechanical stress in the mounting elements.

It is an objective of the present invention to avoid a deformation of the circuit carrier in a circuit carrier arrangement for a camera as specified above at least in part.

This objective is achieved by the subject matter of the independent claim. Further implementations and preferred embodiments are subject matter of the dependent claims.

The invention is based on the finding that a root cause for the deformation of the circuit carrier is a thermal mismatch between the circuit carrier and the housing component. Therefore, in the circuit carrier according to the invention, the joint linear thermal expansion of the housing component and the mounting elements is equal to the linear thermal expansion of the circuit carrier in the respective direction.

According to an aspect of the invention, a circuit carrier arrangement for a camera, in particular an automotive camera, is provided. The circuit carrier arrangement comprises a circuit carrier for mounting an imager chip on a surface of the circuit carrier and a housing component, in particular a housing component for the camera. The circuit carrier arrangement comprises a first mounting element connecting the circuit carrier at a first carrier position of the circuit carrier and the housing component at a first housing position of the housing component to each other and a second mounting element connecting the circuit carrier at a second carrier position of the circuit carrier and the housing component at a second housing position of the housing component to each other. A joint linear thermal expansion of the housing component, the first mounting element and the second mounting element along a straight first connection line between the first carrier position and the second carrier position is equal to a linear thermal expansion of the circuit carrier along the first connection line.

An automotive camera can be understood as a camera which is suitable for being mounted to a motor vehicle to depict an outer environment or an interior of the motor vehicle. An automotive camera may for example be a front camera, a rear camera, a side camera, or an interior camera.

The imager chip is not necessarily a part of the circuit carrier arrangement according to the invention but the circuit carrier is suitable to serve as a carrier for the imager chip and the imager chip may be mounted to the surface of the circuit carrier, for example by means of soldering or another mounting technique. In some embodiments, the circuit carrier arrangement comprises the imager chip and the imager chip is mounted to the surface of the circuit carrier in this case.

The surface of the circuit carrier is, in particular, a plane surface or nominally plane surface. For example, in the assembled camera, the surface may be perpendicular to an optical axis of the camera, in particular of a lens unit or lens arrangement of the camera. The housing component is, in particular, arranged at least in part on a side of the circuit carrier facing the surface or facing a further surface of the circuit carrier opposite to said surface of the circuit carrier.

In particular, there is a gap between the circuit carrier and the first housing position in a direction perpendicular to the surface and the gap is bridged by the first mounting element. Analogously, there is a gap between the circuit carrier and the second housing position in the direction perpendicular to the surface and the gap is bridged by the second mounting element.

For example, the first mounting element may be a first pin, for example a pin with a circular or rectangular or quadratic cross-section. The first housing position may then be understood as a center position of an end of the first pin connected to the housing component and the first carrier position as a center position of an end of the first pin connected to the circuit carrier. For example, the second mounting element may be a second pin, for example a pin with a circular or rectangular or quadratic cross-section. The second housing position may then be understood as a center position of an end of the second pin connected to the housing component and the second carrier position as a center position of an end of the second pin connected to the circuit carrier. A center position may for example correspond to a radial center in case of a circular cross-section and an intersection of diagonals in case of a rectangular or quadratic cross-section.

For example, the housing component may comprise a first opening, for example a bore or through hole or blind hole, for receiving the corresponding end of the first mounting element, which may for example be glued or soldered to the housing component at and/or in the first opening of the housing component. The first housing position is therefore, in particular, defined by the position of the first opening of the housing component. For example, the housing component may comprise a second opening, for example a bore or through hole or blind hole, for receiving the corresponding end of the second mounting element, which may for example be glued or soldered to the housing component at and/or in the second opening of the housing component. The second housing position is therefore, in particular, defined by the position of the second opening of the housing component. For example, the circuit carrier may comprise a first opening, for example a bore or through hole or blind hole, for receiving the corresponding end of the first mounting element, which may for example be glued or soldered to the housing component at and/or in the first opening of the circuit carrier. The first carrier position is therefore, in particular, defined by the position of the first opening of the circuit carrier. For example, the circuit carrier may comprise a second opening, for example a bore or through hole or blind hole, for receiving the corresponding end of the second mounting element, which may for example be glued or soldered to the housing component at and/or in the second opening of the circuit carrier. The second carrier position is therefore, in particular, defined by the position of the second opening of the circuit carrier.

The linear thermal expansion is a length change of one or more objects, for example the circuit carrier or the combination of the housing component, the first mounting element and the second mounting element in the present context, in a predefined direction, for example a direction parallel to the first connection line in the present context, for a specified temperature change. The linear thermal expansion may also be denoted as thermal expansion in simplified form. The length change depends on the respective coefficient of thermal expansion, which is a material parameter, of the respective object in the respective direction and on the initial length of the object before the temperature change has happened. In general terms, the linear thermal expansion $\Delta l$ is given by

$$\Delta l = l_0 \cdot a \,, \qquad \text{(Eq. 1)}$$

with the initial length $l_0$ and the coefficient of thermal expansion $a$.

The joint linear thermal expansion of the housing component and the mounting elements therefore corresponds to the total length change of the housing component and the mounting elements along the first connection line, while the linear thermal expansion of the circuit carrier corresponds to the length change of the circuit carrier along the first connection line.

That the joint linear thermal expansion is equal to the linear thermal expansion of the circuit carrier can be understood such that they are equal up to usual manufacturing tolerances and/or further tolerances. In other words, they are essentially equal.

Since the joint linear thermal expansion is equal to the linear thermal expansion of the circuit carrier, there is no thermal mismatch between said components at least along the first connection line. Consequently, there is no shift of relative positions with respect to each other upon temperature variations. In particular, the distance between the first carrier position and the second carrier position stays constant upon temperature variations. Consequently, a deformation or bending of the circuit carrier and thus also a deformation of the imager chip or shift of the imager chip, for example along the optical axis, is avoided or reduced. Therefore, the need for reactive measures like adjusting the focus or settings of the lens unit may be reduced.

That the joint linear thermal expansion is equal to the linear thermal expansion of the circuit carrier can be achieved in different ways, as can be seen from Eq. 1. In particular, the positions of the first and second carrier position and the first and second housing position openings of the circuit carrier and the housing component, in particular of the first and second openings of the circuit carrier and the housing component, may be adjusted to adjust the respective initial lengths and, consequently, said linear thermal expansions.

Alternatively or in addition, the shape, size and/or geometry of the first and the second mounting element, in particular their components of extension parallel to the surface of the circuit carrier, may be adjusted to adjust the respective initial lengths and, consequently, said linear thermal expansions. For example, instead of straight pins, bent pins, which includes piecewise straight pins, may be used. These options, for example in combination, are particularly beneficial since they allow to widely use an existing design of the circuit carrier arrangement, in particular in terms of materials of the circuit carrier and the housing component and their general geometry.

According to several embodiments, an orthogonal projection of the first housing position to a plane of the surface of the circuit carrier is shifted with respect to the first carrier position along the first connection line by a predefined first offset, which is equal to zero or non-zero. An orthogonal projection of the second housing position to the plane of the surface of the circuit carrier is shifted with respect to the second carrier position along the first connection line by a predefined second offset, which is equal to zero or non-zero. The first offset is non-zero and/or the second offset is non-zero.

In other words, the first offset and the second offset both are non-zero or the first offset is zero and the second offset is non-zero or the first offset is non-zero and the second offset is zero.

In particular, the shape, size and geometry of the first and the second mounting element in combination with the first and the second openings of the housing component and the circuit carrier, respectively, are designed such that the first and the second offset result as described.

Such embodiments allow an increased flexibility regarding the choice of materials for the circuit carrier, the housing component and the mounting elements.

It is noted that the orthogonal projections of the first housing position and the second housing position do not necessarily lie on the first connection line. Rather, a line connecting the orthogonal projection of the first housing position with the first carrier position has a component with a length given by the first offset but may also have a component perpendicular to the first connection line. The same holds analogously for the orthogonal projection of the second housing position.

According to several embodiments, up to said tolerances, it holds that

$$\text{(Eq. 2)}$$

$$l_{0,C}\, a_C = l_{0,H}\, a_H + l_{0,P1} a_{P1} + \; l_{0,P2} a_{P2},$$

wherein $l_{0,c}$ denotes a distance between the first carrier position and the second carrier position at a predefined reference temperature, $l_{0,H}$ denotes a distance between the first housing position and the second housing position at the reference temperature, $l_{0,P1}$ denotes the first offset at the reference temperature, and $l_{0,P2}$ denotes the second offset at the reference temperature. Further, $a_C$ denotes a linear coefficient of thermal expansion of the circuit carrier at the reference temperature, $a_H$ denotes a linear coefficient of thermal expansion of the housing component, $a_{P1}$ denotes a linear coefficient of thermal expansion of the first mounting element, and $a_{P2}$ denotes a linear coefficient of thermal expansion of the second mounting element.

In general, said linear coefficients of thermal expansion are, in particular, defined along the first connection line. In many cases, however, the thermal expansion is isotropic or approximately isotropic. Furthermore, said linear coefficients of thermal expansion may be assumed to be temperature independent themselves. Otherwise, they are for example defined at the reference temperature. The reference temperature may for example be 20°C.

According to several embodiments, the first mounting element is designed as a first bent pin and/or the second mounting element is designed as a second bent pin.

Therein, the expression bent pin comprises pins that are not completely straight. A bent pin may, however, comprise or consist of straight portions and/or curved portions.

By using bent pins instead of straight pins, it becomes possible to avoid the thermal mismatch while keeping an increased flexibility regarding the choice of materials for the circuit carrier, the housing component and the mounting elements.

According to several embodiments, the first bent pin comprises a first portion extending from the first housing position towards the circuit carrier along a normal axis to the surface of the circuit carrier. The first bent pin comprises a second portion extending from the first carrier position towards the housing component along the normal axis. The first bent pin comprises a third portion connecting the first portion to the second portion, wherein the third portion is not parallel to the normal axis. In particular, the third portion may be oblique with respect to the normal axis or perpendicular to the normal axis.

The first portion and/or the second portion and/or the third portion of the first bent pin may for example be straight portions.

In this way, a particularly simple construction of the first bent pin is achieved. Consequently, the third portion of the first bent pin bridges the first offset between the orthogonal projection of the first housing portion to the plane of the surface with respect to the first carrier position along the first connection line. In particular, the first bent pin may consist of the first portion, the second portion and the third portion and therefore, for example, of three straight portions.

According to several embodiments, the second bent pin comprises a first portion extending from the second housing position towards the circuit carrier along a normal axis to the surface of the circuit carrier. The second bent pin comprises a second portion extending from the second carrier position towards the housing component along the normal axis. The second bent pin comprises a third portion connecting the first portion to the second portion, wherein the third portion is not parallel to the normal axis. In particular, the third portion may be oblique with respect to the normal axis or perpendicular to the normal axis.

The first portion and/or the second portion and/or the third portion of the second bent pin may for example be straight portions.

In this way, a particularly simple construction of the second bent pin is achieved. Consequently, the third portion of the second bent pin bridges the second offset between the orthogonal projection of the second housing portion to the plane of the surface with respect to the second carrier position along the first connection line. In particular, the second bent pin may consist of the first portion, the second portion and the third portion and therefore, for example, of three straight portions.

It is noted that, in respective embodiments, further mounting elements mentioned in the following may be designed analogously to the first and/or the second mounting element.

According to several embodiments, the circuit carrier arrangement comprises a third mounting element connecting the circuit carrier at a third carrier position and the housing component at a third housing position to each other.

The explanations regarding the first and the second mounting element, the first and the second carrier position and the first and the second housing position carry over analogously to the third mounting element, the third carrier position and the third housing position, respectively. In particular, the third mounting element may designed as a third bent pin.

According to several embodiments, a joint linear thermal expansion of the housing component, the first mounting element and the third mounting element along a straight second connection line between the first carrier position and the third carrier position is equal to a linear thermal expansion of the circuit carrier along the second connection line. Alternatively or in addition, a joint linear thermal expansion of the housing component, the second mounting element and the third mounting element along a straight third connection line between the second carrier position and the third carrier position is equal to a linear thermal expansion of the circuit carrier along the third connection line.

Consequently, the thermal mismatch is also reduced or avoided along the second connection line and/or the third connection line. Thus, the bending of the circuit carrier is further reduced. In particular, the second connection line and the third connection line are not parallel to the first connection line.

The explanations regarding the first connection line carry over analogously to the second connection line and the third connection line. The explanations regarding the joint linear thermal expansion of the housing component, the first mounting element and the second mounting element carry over analogously to the joint linear thermal expansion of the housing component, the first mounting element and the third mounting element and the joint linear thermal expansion of the housing component, the second mounting element and the third mounting element. The explanations regarding the linear thermal expansion of the circuit carrier along the first connection line carry over analogously to the linear thermal expansion of the circuit carrier along the second connection line and the linear thermal expansion of the circuit carrier along the third connection line.

For example, an orthogonal projection of the first housing position to the plane of the surface of the circuit carrier is shifted with respect to the third carrier position along the second connection line by a predefined further first offset.

According to several embodiments, the first carrier position, the second carrier position, and the third carrier position are arranged at respective corners of an isosceles triangle, wherein the first carrier position corresponds to an apex of the isosceles triangle. The orthogonal projection of the first housing position to the plane of the surface of the circuit carrier lies on a perpendicular bisector of a base of the isosceles triangle opposite to the apex. In particular, the first offset is non-zero and the further first offset is non-zero.

In particular, the thermal expansion of the housing component and the circuit carrier and, for example, the first, second and third mounting element are isotropic or approximately isotropic. Thus, the orientation of the first mounting element compensates the thermal mismatch along the first connection line and the second connection line at the same time.

According to several embodiments, the first carrier position, the second carrier position, and the third carrier position are arranged at respective corners of a rectangle, wherein the second carrier position and the third carrier position lie on a first diagonal of the rectangle. The orthogonal projection of the first housing position to the plane of the surface of the circuit carrier lies on a second diagonal of the rectangle. In particular, the first offset is non-zero and the further first offset is non-zero.

In particular, the thermal expansion of the housing component and the circuit carrier and, for example, the first, second and third mounting element are isotropic or approximately isotropic. Thus, the orientation of the first mounting element compensates the thermal mismatch along the first connection line and the second connection line at the same time. The diagonals may, in particular, be understood such that they also extend outside of the rectangle.

The rectangle may be a square in some embodiments.

According to several embodiments, the circuit carrier arrangement comprises a fourth mounting element connecting the circuit carrier at a fourth carrier position and the housing component at a fourth housing position to each other, the fourth carrier position lying on a corner of the rectangle.

The explanations regarding the first and the second mounting element, the first and the second carrier position and the first and the second housing position carry over analogously to the fourth mounting element, the fourth carrier position and the fourth housing position, respectively. In particular, the fourth mounting element may be designed as a fourth bent pin.

According to several embodiments, a joint linear thermal expansion of the housing component, the first mounting element and the fourth mounting element along a straight fourth connection line between the first carrier position and the fourth carrier position is equal to a linear thermal expansion of the circuit carrier along the fourth connection line.

According to several embodiments, a joint linear thermal expansion of the housing component, the second mounting element and the fourth mounting element along a straight fifth connection line between the second carrier

5

position and the fourth carrier position is equal to a linear thermal expansion of the circuit carrier along the fifth connection line.

According to several embodiments, a joint linear thermal expansion of the housing component, the third mounting element and the fourth mounting element along a straight sixth connection line between the third carrier position and the fourth carrier position is equal to a linear thermal expansion of the circuit carrier along the sixth connection line.

The explanations regarding the first connection line carry over analogously to the fourth, fifth and sixth connection line. The explanations regarding the joint linear thermal expansion of the housing component, the first mounting element and the second mounting element carry over analogously to the joint linear thermal expansion of the housing component, the first mounting element and the fourth mounting element, to the joint linear thermal expansion of the housing component, the second mounting element and the fourth mounting element, and to the joint linear thermal expansion of the housing component, the third mounting element and the fourth mounting element. The explanations regarding the linear thermal expansion of the circuit carrier along the first connection line carry over analogously to the linear thermal expansions of the circuit carrier along the fourth, fifth, and sixth connection line.

According to several embodiments, the housing component consists of aluminum or an aluminum alloy and/or the first mounting element and/or the second mounting element and/or the third mounting element and/or the fourth mounting element consist of copper or a copper alloy, for example brass, or a steel, in particular a stainless steel.

According to several embodiments, the circuit carrier is a printed circuit board, PCB.

The PCB may for example be an FR-4 based PCB.

According to a further aspect of the invention, a camera, in particular an automotive camera, is provided. The camera comprises a circuit carrier arrangement according the invention.

In particular, the camera or the circuit carrier arrangement comprises the imager chip and the imager chip is mounted on the surface.

According to several embodiments, the camera comprises a lens unit with an optical axis, which is perpendicular to the surface of the circuit carrier.

Further embodiments of the camera according to the invention follow directly from the various embodiments of the circuit carrier arrangement according to the invention and vice versa. In particular, individual features and corresponding explanations as well as advantages relating to the various embodiments of the circuit carrier arrangement according to the invention can be transferred analogously to corresponding embodiments of the camera according to the invention.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,

Fig. 1    shows schematically a vehicle with an exemplary embodiment of a camera according to the invention;

Fig. 2    shows schematically an exemplary embodiment of a circuit carrier arrangement according to the invention;

Fig. 3    shows schematically a mounting element of a further exemplary embodiment of a circuit carrier arrangement according to the invention;

Fig. 4    shows schematically a mounting element of a further exemplary embodiment of a circuit carrier arrangement according to the invention;

Fig. 5    shows schematically an arrangement of mounting elements of a further exemplary embodiment of a circuit carrier arrangement according to the invention;

Fig. 6    shows schematically an arrangement of mounting elements of a further exemplary embodiment of a circuit carrier arrangement according to the invention;

Fig. 7    shows schematically an arrangement of mounting elements of a further exemplary embodiment of a circuit carrier arrangement according to the invention; and

Fig. 8    shows schematically an arrangement of mounting elements of a further exemplary embodiment of a circuit carrier arrangement according to the invention.

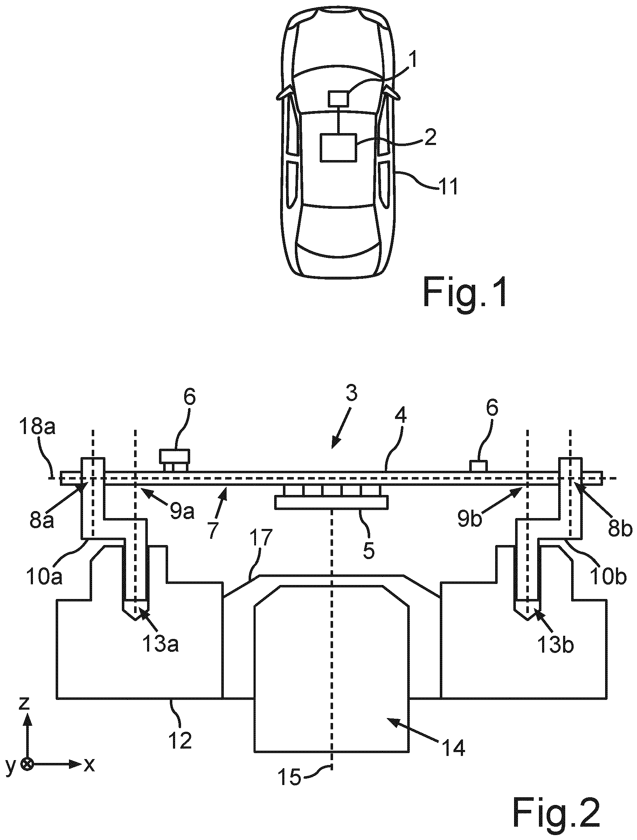

Fig. 1 shows schematically a vehicle 11 with an exemplary embodiment of a camera 1 according to the invention. The camera 1 comprises a circuit carrier arrangement 3 according to the invention. An exemplary embodiment of such a circuit carrier arrangement 3 is shown schematically in Fig. 2.

The camera 1 may for example be part of an electronic vehicle guidance system of the vehicle, which also comprises a data processing system 2, for example an ECU.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated April 2021.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

For example, the data processing system 2 may generate at least one control signal for guiding the vehicle at least in part automatically and/or assistance information for assisting a driver of the vehicle 1 at guiding the vehicle 1 depending on one or more camera images generated by the camera 1.

The at least one control signal may for example be provided to one or more actuators of the vehicle 1, including for example one or more braking actuators and/or one or more steering actuators and/or one or more propulsion motors of the vehicle 1. The one or more actuators may affect a longitudinal and/or lateral control of the vehicle 1 in order to guide the vehicle at least in part automatically based on the at least one control signal.

The assistance information may be output by means of an output device of the vehicle 1, for example a display and/or an audio output system and/or a haptic output system.

The circuit carrier arrangement 3 comprises a circuit carrier 4 for mounting an imager chip 5 on a surface 7 of the circuit carrier 4. The circuit carrier arrangement 3 comprises a housing component 12, a first mounting element 10a connecting the circuit carrier 4 at a first carrier position 8a and the housing component 12 at a first housing position to each other, and a second mounting element 10b connecting the circuit carrier 4 at a second carrier position 8b and the housing component 12 at a second housing position to each other. A joint linear thermal expansion of the housing component 12, the first mounting element 10a and the second mounting element 10b along a straight first connection line 18a between the first carrier position 8a and the second carrier position 8b is equal to a linear thermal expansion of the circuit carrier 4 along the first connection line 18a.

The camera 1 may for example comprise a lens unit 14 with an optical axis 15 perpendicular to the surface 7 and perpendicular to an active area of the imager chip 5. The lens unit 14 may for example be fastened by a lens holder 17 to the housing component 12. The circuit carrier 4 may, in some embodiments, carry one or more further electronic components 6 apart from the imager chip 5.

The surface 7 may for example be parallel to an x-y-plane of a Cartesian coordinate system and the optical axis 15 may be parallel to the z-axis of the coordinate system.

For example, the first mounting element 10a and the second mounting element 10b may be implemented as bent pins 10a, 10b as shown for example in Fig. 2. The bent pins 10a, 10b may for example be mounted to the housing component 12 in respective blind holes 13a, 13b and for example in respective through holes to the circuit carrier 4.

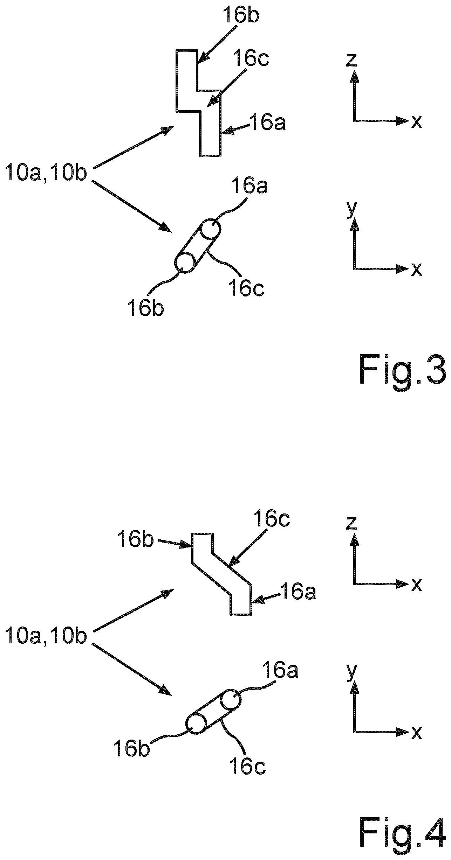

As shown in Fig. 3 and Fig. 4, the bent pins 10a, 10b may for example be piecewise straight with a first portion 16a extending from the first housing position towards the circuit carrier 4 along a normal axis to the surface 7 of the circuit carrier 4, a second portion 16b extending from the first carrier position 8a towards the housing component 12 along the normal axis, and a third portion 16c connecting the first portion 16a to the second portion 16b. The third portion 16c is for example perpendicular to the normal axis, as shown in Fig. 3, or oblique with respect to the normal axis, as shown in Fig. 4.

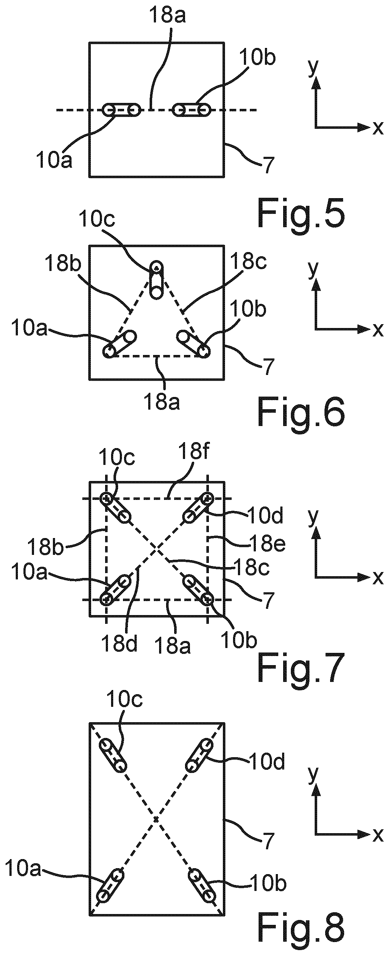

Due to the described design of the mounting elements 10a, 10b, an orthogonal projection 9a of the first housing position to a plane of the surface 7 is shifted with respect to the first carrier position 8a along the first connection line 18a by a non-zero first offset, as shown schematically in Fig. 5. An orthogonal projection 9b of the second housing position to the plane of the surface 7 of the circuit carrier 4 is shifted with respect to the second carrier position 8b along the first connection line 18a by a non-zero second offset.

By tuning the size, shape and/or geometry of the mounting elements 10a, 10b, in particular, the third portions 16c, it is achieved that

$$l_{0,C}\, a_C = l_{0,H}\, a_H + l_{0,P1}a_{P1} + l_{0,P2}a_{P2},$$

wherein $l_{0,C}$ denotes a distance between the first carrier position 8a and the second carrier position 8b, $l_{0,H}$ denotes a distance between the first housing position and the second housing position, $l_{0,P1}$ denotes the first offset, $l_{0,P2}$ denotes the second offset, $a_C$ denotes the linear coefficient of thermal expansion of the circuit carrier 4, $a_H$ denotes the linear coefficient of thermal expansion of the housing component 12, $a_{P1}$ denotes a linear coefficient of thermal expansion of the first mounting element 10a, and $a_{P2}$ denotes a linear coefficient of thermal expansion of the second mounting element 10b.

The orientation of the bent pins 10a, 10b in the x-y-plane may, in several embodiments, be chosen such that the thermal mismatch is compensated along different directions parallel to the x-y-plane at the same time, as shown for several examples in Fig. 6. Fig. 7 and Fig. 8 assuming an isotropic thermal expansion of all involved components parallel to the x-y-plane.

In the examples of Fig. 6 to Fig. 8, the circuit carrier arrangement 3 comprises a third mounting element 10c connecting the circuit carrier 4 at a third carrier position and the housing component 12 at a third housing position to each other.

In the example of Fig. 6, the first carrier position 8a, the second carrier position 8b, and the third carrier position are arranged at respective corners of an isosceles triangle, in particular an equilateral triangle. The first carrier position 8a corresponds to an apex of the isosceles triangle. The orthogonal projection 9a of the first housing position to the plane of the surface 7 of the circuit carrier 4 lies on a perpendicular bisector of a base of the isosceles triangle opposite to the apex. The base is the line connecting the second carrier position 8b to the third carrier position.

In this way, it may be achieved that the joint linear thermal expansion of the housing component 12, the first mounting element 10a and the third mounting element 10c along a straight second connection line 18b between the first carrier position 8a and the third carrier position is equal to a linear thermal expansion of the circuit carrier 4 along the second connection line 18b and/or that a joint linear thermal expansion of the housing component 12, the second mounting element 10b and the third mounting element 10c along a straight third connection line 18c between the second carrier position 8b and the third carrier position is equal to a linear thermal expansion of the circuit carrier 4 along the third connection line 18c.

In particular, in case of an equilateral triangle, the orthogonal projection 9b of the second housing position to the plane of the surface 7 may lie on a perpendicular bisector of a base of the isosceles triangle opposite to the second carrier position 8b and the orthogonal projection of the third housing position to the plane of the surface 7 may lie on a perpendicular bisector of a base of the isosceles triangle opposite to the third carrier position.

In the examples of Fig. 7 and Fig. 8, the circuit carrier arrangement 3 comprises a fourth mounting element 10d connecting the circuit carrier 4 at a fourth carrier position and the housing component 12 at a fourth housing position to each other. The first carrier position 8a, the second carrier position 8b, the third carrier position and the fourth carrier position are arranged at respective corners of a rectangle, which is a square in the example of Fig. 7.

The second carrier position 8b and the third carrier position lie on a first diagonal of the rectangle, while the first carrier position 8a and the fourth carrier position lie on a second diagonal of the rectangle. The orthogonal projection 9a of the first housing position to the plane of the surface 7 of the circuit carrier 4 lies on the second diagonal of the rectangle. For example, the orthogonal projection 9b of the second housing position to the plane of the surface 7 of the circuit carrier 4 lies on the first diagonal of the rectangle, the orthogonal projection of the third housing position to the plane of the surface 7 of the circuit carrier 4 lies on the first diagonal of the rectangle, and the orthogonal projection of the fourth housing position to the plane of the surface 7 of the circuit carrier 4 lies on the second diagonal of the rectangle.

In this way, it may be achieved that a joint linear thermal expansion of the housing component 12, the first mounting element 10a and the fourth mounting element 10d along a straight fourth connection line 18d between the first carrier position 8a and the fourth carrier position is equal to a linear thermal expansion of the circuit carrier 4 along the fourth connection line 18d and/or a joint linear thermal expansion of the housing component 12, the second mounting element 10b and the fourth mounting element 10d along a straight fifth connection line 18e between the second carrier position 8b and the fourth carrier position is equal to a linear thermal expansion of the circuit carrier 4 along the fifth connection line 18e and/or a joint linear thermal expansion of the housing component 12, the third mounting element 10c and the fourth mounting element 10d along a straight sixth connection line 18f between the third carrier position and the fourth carrier position is equal to a linear thermal expansion of the circuit carrier 4 along the sixth connection line 18f.

**Claims**

1. Circuit carrier arrangement (3) for a camera (1), wherein

   - the circuit carrier arrangement (3) comprises a circuit carrier (4) for mounting an imager chip (5) on a surface (7) of the circuit carrier (4);
   - the circuit carrier arrangement (3) comprises a housing component (12), a first mounting element (10a) connecting the circuit carrier (4) at a first carrier position (8a) and the housing component (12) at a first housing position to each other, and a second mounting element (10b) connecting the circuit carrier (4) at a second carrier position (8b) and the housing component (12) at a second housing position to each other;
   - a joint linear thermal expansion of the housing component (12), the first mounting element (10a) and the second mounting element (10b) along a straight first connection line (18a) between the first carrier position (8a) and the second carrier position (8b) is equal to a linear thermal expansion of the circuit carrier (4) along the first connection line (18a).

2. Circuit carrier arrangement (3) according to claim 1, wherein

   - an orthogonal projection (9a) of the first housing position to a plane of the surface (7) of the circuit carrier (4) is shifted with respect to the first carrier position (8a) along the first connection line (18a) by a predefined first offset, which is equal to zero or non-zero;
   - an orthogonal projection (9b) of the first housing position to the plane of the surface (7) of the circuit carrier (4) is shifted with respect to the second carrier position (8b) along the first connection line (18a) by a predefined second offset, which is equal to zero or non-zero;
   - the first offset is non-zero and/or the second offset is non-zero.

3. Circuit carrier arrangement (3) according to claim 2, wherein

$$l_{0,C}\, a_C = l_{0,H}\, a_H + l_{0,P1} a_{P1} + \; l_{0,P2} a_{P2},$$

   wherein $l_{0,C}$ denotes a distance between the first carrier position (8a) and the second carrier position (8b) at a predefined reference temperature, $l_{0,H}$ denotes a distance between the first housing position and the second housing position at the reference temperature, $l_{0,P1}$ denotes the first offset at the reference temperature, $l_{0,P2}$ denotes the second offset at the reference temperature, $a_C$ denotes a linear coefficient of thermal expansion of the circuit carrier (4), $a_H$ denotes a linear coefficient of thermal expansion of the housing component (12), $a_{P1}$ denotes a linear coefficient of thermal expansion of the first mounting element (10a), and $a_{P2}$ denotes a linear coefficient of thermal expansion of the second mounting element (10b).

4. Circuit carrier arrangement (3) according to one of the preceding claims, wherein the first mounting element (10a) is designed as a first bent pin and/or the second mounting element (10b) is designed as a second bent pin.

5. Circuit carrier arrangement (3) according to claim 4, wherein

   - the first bent pin comprises a first portion (16a) extending from the first housing position towards the circuit carrier (4) along a normal axis to the surface (7) of the circuit carrier (4);
   - the first bent pin comprises a second portion (16b) extending from the first carrier position (8a) towards the housing component (12) along the normal axis; and
   - the first bent pin comprises a third portion (16c) connecting the first portion (16a) to the second portion (16b), wherein the third portion (16c) is not parallel to the normal axis or is perpendicular to the normal axis.

6. Circuit carrier arrangement (3) according to one of the preceding claims, wherein the circuit carrier arrangement (3) comprises a third mounting element (10c) connecting the circuit carrier (4) at a third carrier position and the housing component (12) at a third housing position to each other, and

   - a joint linear thermal expansion of the housing component (12), the first mounting element (10a) and the third mounting element (10c) along a straight second connection line (18b) between the first carrier position (8a) and the third carrier position is equal to a linear thermal expansion of the circuit carrier (4) along the second connection line (18b); and/or

- a joint linear thermal expansion of the housing component (12), the second mounting element (10b) and the third mounting element (10c) along a straight third connection line (18c) between the second carrier position (8b) and the third carrier position is equal to a linear thermal expansion of the circuit carrier (4) along the third connection line (18c).

7. Circuit carrier arrangement (3) according to claim 6, wherein

- the first carrier position (8a), the second carrier position (8b), and the third carrier position are arranged at respective corners of an isosceles triangle, wherein the first carrier position (8a) corresponds to an apex of the isosceles triangle; and
- the orthogonal projection (9a) of the first housing position to the plane of the surface (7) of the circuit carrier (4) lies on a perpendicular bisector of a base of the isosceles triangle opposite to the apex.

8. Circuit carrier (4) according to claim 6, wherein

- the first carrier position (8a), the second carrier position (8b), and the third carrier position are arranged at respective corners of a rectangle, wherein the second carrier position (8b) and the third carrier position lie on a first diagonal of the rectangle;
- the orthogonal projection (9a) of the first housing position to the plane of the surface (7) of the circuit carrier (4) lies on a second diagonal of the rectangle.

9. Circuit carrier arrangement (3) according to claim 8, wherein the circuit carrier arrangement (3) comprises a fourth mounting element (10d) connecting the circuit carrier (4) at a fourth carrier position and the housing component (12) at a fourth housing position to each other, the fourth carrier position lying on a corner of the rectangle, and

- a joint linear thermal expansion of the housing component (12), the first mounting element (10a) and the fourth mounting element (10d) along a straight fourth connection line (18d) between the first carrier position (8a) and the fourth carrier position is equal to a linear thermal expansion of the circuit carrier (4) along the fourth connection line (18d); and/or
- a joint linear thermal expansion of the housing component (12), the second mounting element (10b) and the fourth mounting element (10d) along a straight fifth connection line (18e) between the second carrier position (8b) and the fourth carrier position is equal to a linear thermal expansion of the circuit carrier (4) along the fifth connection line (18e); and/or
- a joint linear thermal expansion of the housing component (12), the third mounting element (10c) and the fourth mounting element (10d) along a straight sixth connection line (18f) between the third carrier position and the fourth carrier position is equal to a linear thermal expansion of the circuit carrier (4) along the sixth connection line (18f).

10. Circuit carrier arrangement (3) according to one of the preceding claims, wherein the housing component (12) consists of aluminum or an aluminum alloy.

11. Circuit carrier arrangement (3) according to one of the preceding claims, wherein the first mounting element (10a) and/or the second mounting element (10b) consist of copper or a copper alloy or a steel.

12. Circuit carrier arrangement (3) according to one of the preceding claims comprising the imager chip (5) and the imager chip (5) is mounted on the surface (7).

13. Camera (1) comprising a circuit carrier arrangement (3) according to one of the preceding claims.

14. Camera (1) according to claim 13 comprising a lens unit with an optical axis, which is perpendicular to the surface (7) of the circuit carrier (4).

Fig.1

Fig.2

Fig.3

Fig.4

Fig.5

Fig.6

Fig.7

Fig.8

Europäisches
Patentamt

European
Patent Office

Office européen
des brevets

**EUROPEAN SEARCH REPORT**

Application Number

EP 24 20 9107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/042106 A1 (SCHEJA JOCHEN [CH]) 8 February 2018 (2018-02-08) | 1,12-14 | INV. H04N23/51 |
| Y | * paragraphs [0021], [0064]; figure 1 * ----- | 1-14 | H04N23/52 H04N23/54 |
| Y | US 2021/274077 A1 (POLAK ANDRZEJ [DE]) 2 September 2021 (2021-09-02) * paragraphs [0035], [0045]; figure 7 * ----- | 1-14 | H04N23/55 |
| A | US 2024/056666 A1 (GRAAE MICHAEL [US] ET AL) 15 February 2024 (2024-02-15) * paragraph [0029] * ----- | 1-14 | |
| A | CN 110 769 141 A (NINGBO WISSEN INTELLIGENT SENSING TECH CO LTD) 7 February 2020 (2020-02-07) * figure 2 * ----- | 2-14 | |

**TECHNICAL FIELDS SEARCHED (IPC)**

H04N

The present search report has been drawn up for all claims

| Place of search | Date of completion of the search | Examiner |
|---|---|---|
| Munich | 19 March 2025 | Oelsner, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 9107

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | | Publication date |
|---|---|---|---|---|
| US 2018042106 A1 | 08-02-2018 | CN | 107688268 A | 13-02-2018 |
| | | EP | 3280127 A1 | 07-02-2018 |
| | | US | 2018042106 A1 | 08-02-2018 |
| US 2021274077 A1 | 02-09-2021 | CN | 113391419 A | 14-09-2021 |
| | | EP | 3872551 A1 | 01-09-2021 |
| | | US | 2021274077 A1 | 02-09-2021 |
| US 2024056666 A1 | 15-02-2024 | NONE | | |
| CN 110769141 A | 07-02-2020 | NONE | | |

EPO FORM P0459

For more details about this annex : see Official Journal of the European Patent Office, No. 12/82